# EUROPEAN PATENT APPLICATION

(11) **EP 4 621 564 A1**
(43) Date of publication of application: **24.09.2025**
(21) Application number: 25155099.2
(22) Date of filing: 30.01.2025
(51) Int. Cl.: G06F 9/38

(54) **BANDWIDTH AWARE SIMULTANEOUS MULTI-THREADING**

(30) Priority: 22.03.2024 US 202418613947
(71) Applicant: INTEL Corporation, Santa Clara, CA 95054 (US)
(72) Inventor: RANGANATHAN, Adithya, 560048 Bengaluru (IN); GAUR, Jayesh, Bengaluru (IN); SUBRAMONEY, Sreenivas, 560103 Bangalore (IN)
(74) Representative: Samson & Partner Patentanwälte mbB

(57) **Abstract**

Techniques for bandwidth aware simultaneous multithreading are described. In an embodiment, an apparatus includes front-end circuitry and back-end circuitry. The front-end circuitry is to process at least two instruction threads in a plurality of front-end pipeline stages. The front-end circuitry is to operate in a first mode and a second mode. In the first mode at least one of the plurality of front-end pipeline stages is configured to process only one of the at least two instruction threads per clock cycle. in the second mode the at least one of the plurality of front-end pipeline stages is configured to process at least two of the at least two instruction threads per clock cycle. The back-end circuitry is to execute operations based on the at least two instruction threads.

## Description

### BACKGROUND

Processors and processor cores in computers and other information processing systems may support a parallel computing or multi-threading technique to increase core utilization. For example, a core may support simultaneous multi-threading (SMT) to provide for two or more independent threads to run on the same core.

### BRIEF DESCRIPTION OF DRAWINGS

Various examples in accordance with the present disclosure will be described with reference to the drawings, in which:
Figure 1 illustrates a front-end architecture according to an existing approach and as may conceptually represent one of two modes of operation according to embodiments.
Figure 2A illustrates a branch prediction unit according to embodiments.
Figure 2B illustrates a method for configuring a branch prediction unit according to embodiments.
Figure 2C illustrates a portion of a front-end architecture configured in a bandwidth mode according to embodiments.
Figure 2D illustrates micro-operation allocation in a latency mode according to embodiments.
Figure 2E illustrates micro-operation allocation in a bandwidth mode according to embodiments.
Figure 2F illustrates a level one cache according to embodiments.
Figure 3 illustrates a method for configuring pipeline stages and/or structures according to embodiments.
FIG. 4 illustrates an example computing system.
FIG. 5 illustrates a block diagram of an example processor and/or System on a Chip (SoC) that may have one or more cores and an integrated memory controller.
FIG. 6A is a block diagram illustrating both an example in-order pipeline and an example register renaming, out-of-order issue/execution pipeline according to examples.
FIG. 6B is a block diagram illustrating both an example in-order architecture core and an example register renaming, out-of-order issue/execution architecture core to be included in a processor according to examples.
FIG. 7 illustrates examples of execution unit(s) circuitry.
FIG. 8 is a block diagram illustrating the use of a software instruction converter to convert binary instructions in a source instruction set architecture to binary instructions in a target instruction set architecture according to examples.

### DETAILED DESCRIPTION

The present disclosure relates to methods, apparatus, systems, and non-transitory computer-readable storage media for bandwidth aware simultaneous multi-threading. According to some examples, an apparatus includes front-end circuitry and back-end circuitry. The front-end circuitry is to process at least two instruction threads in a plurality of front-end pipeline stages. The front-end circuitry is to operate in a first mode and a second mode. In the first mode at least one of the plurality of front-end pipeline stages is configured to process only one of the at least two instruction threads per clock cycle. in the second mode the at least one of the plurality of front-end pipeline stages is configured to process at least two of the at least two instruction threads per clock cycle. The back-end circuitry is to execute operations based on the at least two instruction threads.

As mentioned in the background section, a processor or processor core in a computer and other information processing system may support SMT to provide for two or more independent threads to run on the same core. According to an existing approach (which may be referred to as a legacy approach), SMT is implemented in such a way that, in the front-end (FE) of the processor core, in any given cycle, only one thread holds ownership of a pipeline stage (e.g., only one thread can do a branch prediction unit (BPU) lookup or micro-operation (uop) cache lookup in a given cycle), but the out-of-order (OoO) back-end is largely thread agnostic (e.g., the oldest ready instruction is scheduled from the reservation station (RS) for execution irrespective of which thread it comes from). This difference between the front-end and the back-end may lead to an imbalance in the bandwidth between the front-end and the back-end because two threads may be saturating the available back-end bandwidth while only one thread is utilizing the available front-end bandwidth in any given cycle. This imbalance will increase as future cores become wider.

Methods, apparatus, systems, non-transitory computer-readable storage media, etc. according to embodiments, any or any aspect of which may be referred to as bandwidth aware SMT or BAS, may help to overcome this mismatch in bandwidth between the front-end and the back-end. As further described below, in some embodiments BAS may be implemented in one or more front-end circuits, structures, hardware, etc. (e.g., decoded stream buffer (DSB), micro-operation allocation and register renaming structures, etc.) with thread selection circuitry or logic that picks an owner thread at certain front-end pipe stages (e.g., DSB, allocation/rename, etc.). That owner thread gets access to the full bandwidth of the machine in these stages, but if the owner thread is not able to saturate or fully utilize the available bandwidth, an alternate thread is given access to make use of the remaining bandwidth left over by the owner thread to push its uops forward opportunistically. Therefore, in contrast to existing approaches in which only one thread owns a front-end pipeline stage per cycle (e.g., only one thread can perform a DSB read or allocation/rename into the OoO back-end per cycle), more than one thread (e.g., both threads in a two-thread per core SMT (SMT2) implementation) may saturate the available bandwidth at these pipeline stages of the machine.

As further described below, in some embodiments BAS may also or instead be implemented to include banking of a front-end structure (e.g., BPU, branch target buffer (BTB), etc.) such that each thread (e.g., of two threads) gets its own exclusive bank to enable sustained branch prediction bandwidth. For example, in an SMT2 implementation, branch prediction bandwidth may be approximately twice that of a prior approach, which may significantly outweigh the cost of any increase to the branch misprediction rate due to more BPU/BTB misses from banking.

As further described below, BAS may also or instead be implemented to include banking in the back-end (e.g., banking a first level or level one cache (L1) and allocating a bank per thread). This approach may help resolve bottleneck shifts from the front-end to the back-end (e.g., improved utilization of front-end bandwidth shifting bottleneck to load execution bandwidth which is limited by the back-end load ports). Embodiments including L1 cache banking per thread, for SMT2 may give approximately twice the bandwidth to access the data cache unit (DCU), which may significantly outweigh the cost of a higher L1 miss rate due to lower L1 utilization.

As further described below, to avoid a negative impact of capacity reduction due to banking and assigning a private bank per thread, embodiments may include a hybrid approach supporting dynamically switching between modes (e.g., a bandwidth mode in which banking is implemented and a latency mode according to a legacy approach in which there is no exclusive ownership of any bank by any thread). For example, as further described below, the bandwidth properties of workloads running on an SMT core (e.g., capacity misses in a BAS banked structure) may be dynamically monitored to provide for switching to a latency mode (e.g., in which the BPU, BTB, and/or L1 are completely shared between active threads) based on an indication that running in bandwidth mode might decrease performance (e.g., if the additional bandwidth is not needed, if misses per thousand instructions (MPKI) is deemed more important).

In embodiments, when the core becomes bandwidth bound at the front-end or the L1 cache, it dynamically provides every thread a private bank of BPU/BTB or L1, respectively. Thus, both SMT2 threads can look up the BPU or L1 in parallel to get approximately twice the bandwidth compared to latency mode. Providing a private bank per thread effectively reduces the capacity compared to a fully shared latency mode, resulting in more misses in these structures. However, in certain bandwidth bound scenarios, providing increased bandwidth is more important for performance than an increase in mispredictions or misses in BPU or L1 due to banking. Hybrid implementations of BAS may favor latency concerns when bandwidth is not as important (e.g., which may be detected by simply monitoring the MPKI and the bandwidth requirements of the workloads running over regular intervals of time) by staying in latency mode (e.g., allowing complete sharing of the BPU or L1, thus reducing the misses in these structures).

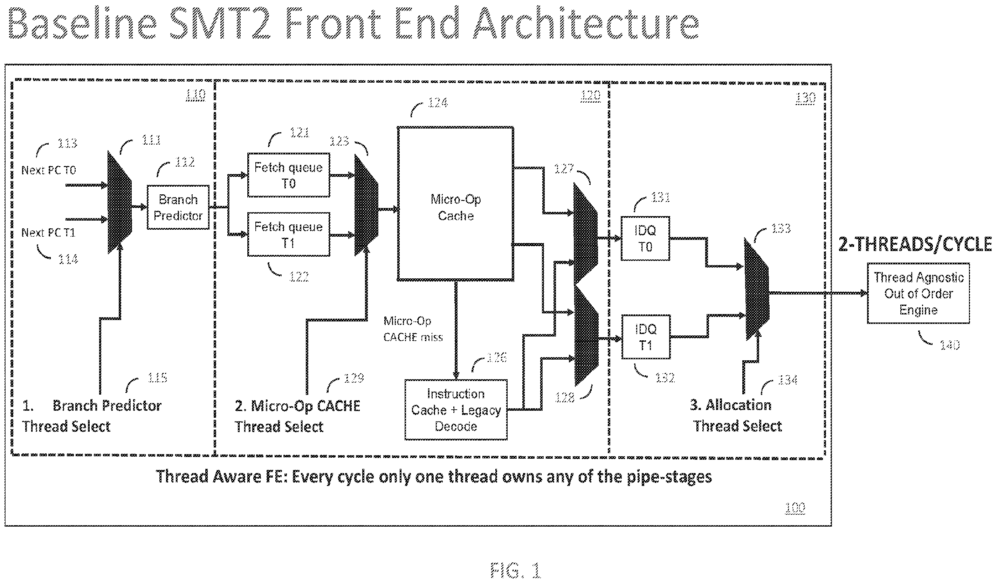

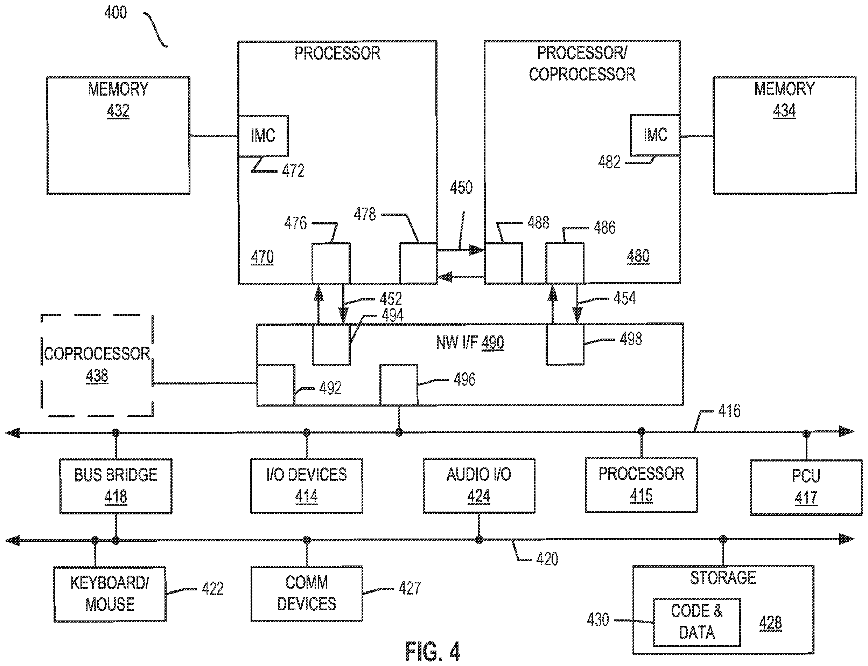

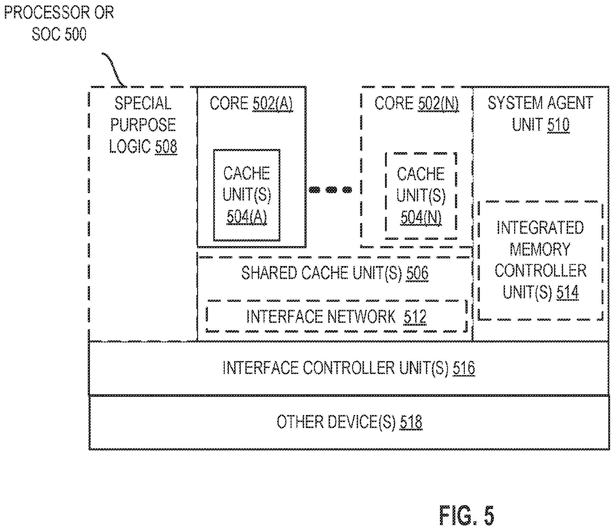

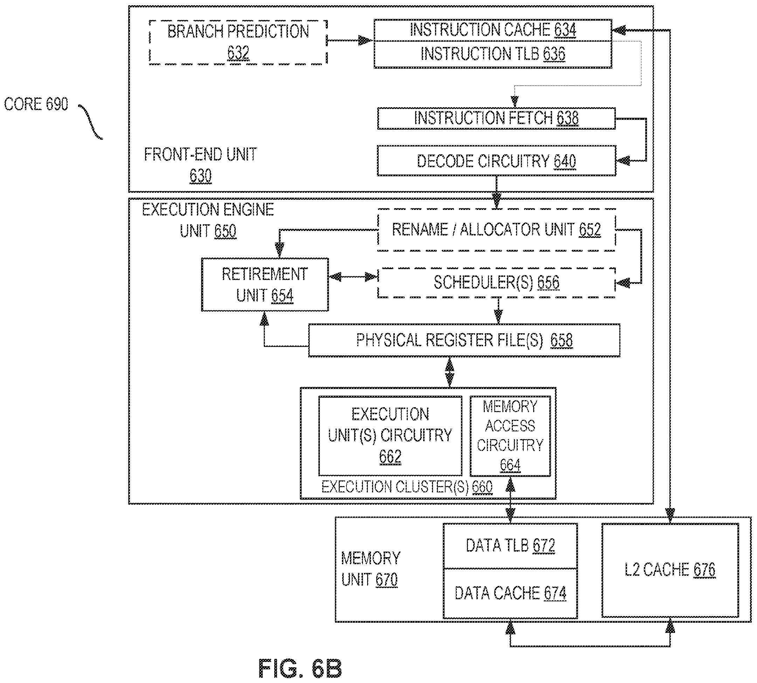

Figure 1 illustrates a baseline pipelined SMT2 front-end architecture 100 according to an existing approach and may conceptually represent one (e.g., a latency mode, which may also be called a legacy mode or a low bandwidth (BW) mode) of two (e.g., a latency mode and a bandwidth mode, which may also be called a high bandwidth (BW) mode) or more modes of operation according to embodiments. Front-end architecture 100 may be implemented in a processor, processor core, execution core, etc. which may be any type of processor/core, including a general-purpose microprocessor/core, such as a processor/core in the Intel^{®} Core^{®} Processor Family or other processor family from Intel^{®} Corporation or another company, a special purpose processor or microcontroller, or any other device or component in an information processing system in which an embodiment may be implemented. For example, front-end architecture 100 may be implemented in any of processors 470, 480, or 415 in Figure 4, processor 500 or one of cores 502A to 502N in Figure 5, and/or core 690 in Figure 6B, each as described below, in circuitry, logic gates, structures, hardware, etc., all or parts of which may be included in a discrete component and/or integrated into the circuitry of a processing device or any other apparatus in a computer or other information processing system, to, for example, fetch, scan, decode, etc. instructions, and generate as an output one or more micro-operations, micro-code entry points, microinstructions, other instructions, or other control signals, which are decoded from, or which otherwise reflect, or are derived from, original instructions. The decoding may be implemented using various different mechanisms. Examples of suitable mechanisms include, but are not limited to, look-up tables, hardware implementations, programmable logic arrays (PLAs), microcode read only memories (ROMs), etc.

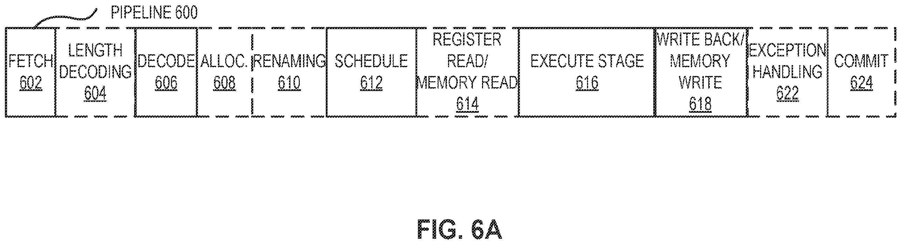

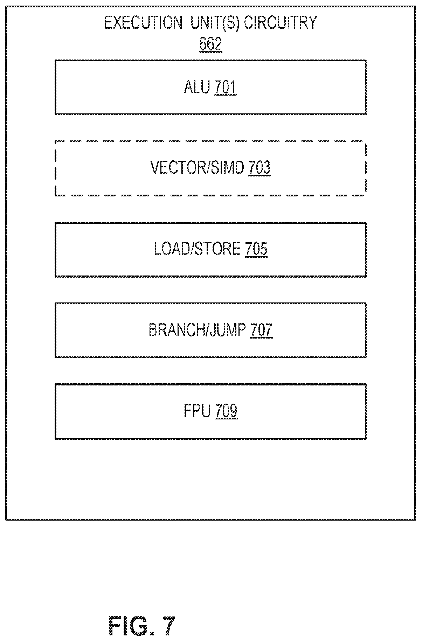

As shown, front-end architecture 100 includes pipeline stages 110 (which may represent or correspond to, in whole or in part, fetch stage 602 of pipeline 600 in Figure 6A), 120 (which may represent or correspond to, in whole or in part, decode stage 606 of pipeline 600 in Figure 6A), and 130 (which may represent or correspond to, in whole or in part, any of or combination of allocation stage 608, renaming stage 610, and schedule stage 612 of pipeline 600 in Figure 6A), which lead to thread agnostic OoO engine 140 (which may represent or correspond to, in whole or in part, any of or combination of execute stage 616 of pipeline 600 in Figure 6A, execution cluster(s) 660 of core 690 in Figure 6B, and execution unit(s) circuitry 662 in Figures 6B and 7). Pipeline stage 110 may be implemented in circuitry, logic gates, structures, hardware (which may represent or correspond to, in whole or in part, branch prediction circuitry 632 of core 690 in Figure 6B), such as multiplexer 111 and branch predictor 112. Pipeline stage 120 may be implemented in circuitry, logic gates, structures, hardware (which may represent or correspond to, in whole or in part, any of or combination of instruction cache 634, instruction translation lookaside buffer (TLB) 636, instruction fetch circuitry 638, and decode circuitry 640 of core 690 in Figure 6B), such as fetch queue 121, fetch queue 122, multiplexer 123, micro-op cache 124, instruction cache/decoder 126, multiplexer 127, and multiplexer 128. Pipeline stage 130 may be implemented in circuitry, logic gates, structures, hardware (which may represent or correspond to, in whole or in part, any of or combination of rename/allocator unit 652 and scheduler(s) 656 of core 690 in Figure 6B), such as instruction decode queue (IDQ) 131, IDQ 132, and multiplexer 133.

As shown for example in Figure 1, in a given cycle in pipeline stage 110, multiplexer 111 may select only one of next program counter (PC) thread 0 (T0) 113 and next PC thread 1 (T1) 114, based on branch predictor thread select 115, to provide inputs to branch predictor 112. Branch predictor 112 provides inputs to fetch queue 121 for T0 and to fetch queue 122 for T1. In a given cycle in pipeline stage 120, multiplexer 123 may select only one of T0 from fetch queue 121 and T1 from fetch queue 122, based on micro-op cache thread select 129, to provide inputs to micro-op cache 124. In a cycle in which multiplexer 123 has selected T0, multiplexer 127 may select between micro-op cache 124 and instruction cache/decoder 126, based on a micro-op cache miss, to provide inputs to IDQ 131 for T0. In a cycle in which multiplexer 123 has selected T1, multiplexer 128 may select between micro-op cache 124 and instruction cache/decoder 126, based on a micro-op cache miss, to provide inputs to IDQ 132 for T1. In a given cycle in pipeline stage 130, multiplexer 133 may select only one of T0 from IDQ 131 and T1 from IDQ 132, based on allocation thread select 134, to provide inputs to thread agnostic OoO engine 140, which has a bandwidth of two threads per cycle.

According to an existing approach and/or in one mode (e.g., a latency mode) of two (e.g., a latency mode and a bandwidth mode) or more modes of operation according to embodiments, thread aware front-end architecture 100, only one thread holds ownership of any front-end pipeline stage (e.g., 110, 120, and/or 130) in any given cycle. The owner thread is decided by a thread selection logic. In embodiments, each front-end pipeline stage has its own thread selection logic which may, for example, use round robin selection to provide quality of service (QoS) for both threads.

In an other mode (e.g., a bandwidth mode) of the two or more modes of operation according to embodiments, an imbalance in bandwidth utilization between the front-end and the back-end (e.g., including OoO engine 140) may be overcome by boosting the bandwidth at various regions of the front-end (e.g., BPU, DSB, rename).

For example, when the number of branches in code is high, the BPU constraints may restrict the fetch bandwidth. As a result, there may be starvation from the BPU. Therefore, embodiments may provide for simultaneous and independent branch predictions from both threads in SMT2. As it may not be feasible to double the ports in the tables of BPU and the BTB to support simultaneous lookup from two threads, embodiments may include banking of the tables of the BPU and BTB.

With BPU banking, the space available as seen by each thread in bandwidth mode is now only half that seen in latency mode. As a result, capacity misses may lead to more branch mispredictions. Also, if both threads running in the core are homogeneous (same application), the latency mode BPU benefits by cross-training. When one thread trains the BPU for its control flow, the other thread need not encounter cold misses when its program goes through the same control flow for the first time which the other thread had earlier trained the BPU for. Therefore, embodiments may implement hybrid BAS for the BPU.

For example, the BPU may initially be configured in a latency mode in which both threads share all the hardware structures including the BTB (e.g., both banks of every hardware branching structure can be accessed by both threads). Embodiments may include sampling the MPKI and/or instruction bandwidth supplied by the BPU at regular intervals. When the bandwidth supplied by the BPU in terms of number of instructions is less than the rename width of the machine, then BPU bandwidth is likely to be a bottleneck. In such scenarios, in which BPU bandwidth is detected to be low and/or when MPKI is at acceptable levels (e.g., which may be determined by sweeping through different MPKI thresholds), the BPU and BTB are reconfigured to function in bandwidth mode, in which one thread has exclusive access to one bank and the other thread has exclusive access to the other bank. In bandwidth mode, banking may be a reliable mechanism to sustain approximately twice the BPU bandwidth compared to latency mode. Thus, embodiments including hybrid BAS for the BPU may provide for enabling banking only when needed, so as not to induce any penalty in the form of increasing the MPKI.

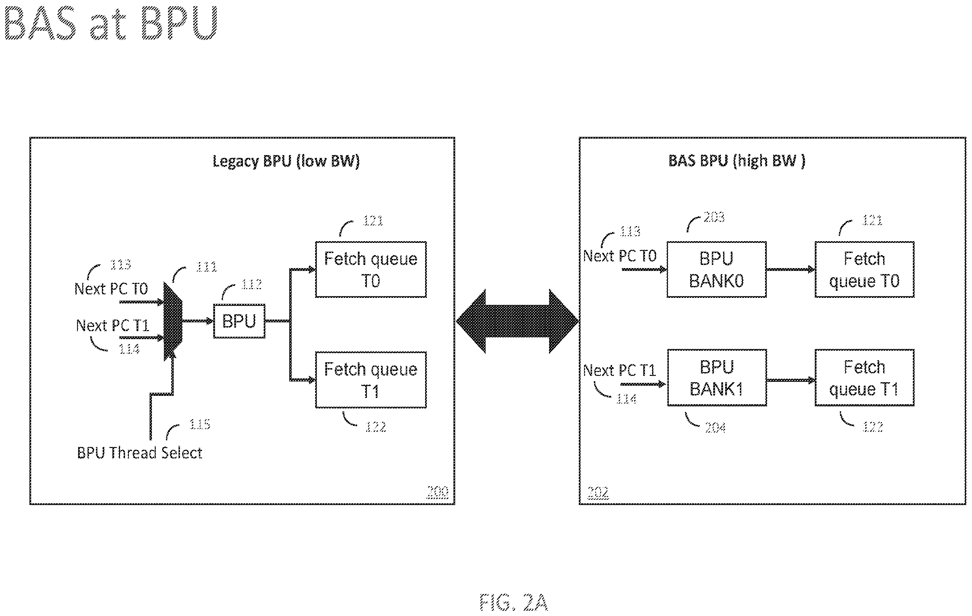

For example, as shown in Figure 2A, hybrid BAS may include the capability to operate in a latency, legacy, or low bandwidth configuration 200 and, at different times, in a bandwidth or high bandwidth configuration 202. In latency configuration 200, as also shown in Figure 1, multiplexer 111 may, in any given cycle, select between next PC T0 113 and next PC T1 114, based on branch predictor thread select 115, to provide inputs to branch predictor 112, which provides inputs to fetch queue 121 for T0 and to fetch queue 122 for T1. In bandwidth configuration 202, branch predictor 112 may be banked, such that a first BPU bank 0 (e.g., BPU bank 203) may receive inputs from next PC T0 113 so as to provide inputs to fetch queue 121 for T0, while in the same clock cycle, a second BPU bank 1 (e.g., BPU bank 204) may receive inputs from next PC T1 114 so as to provide inputs to fetch queue 122 for T1.

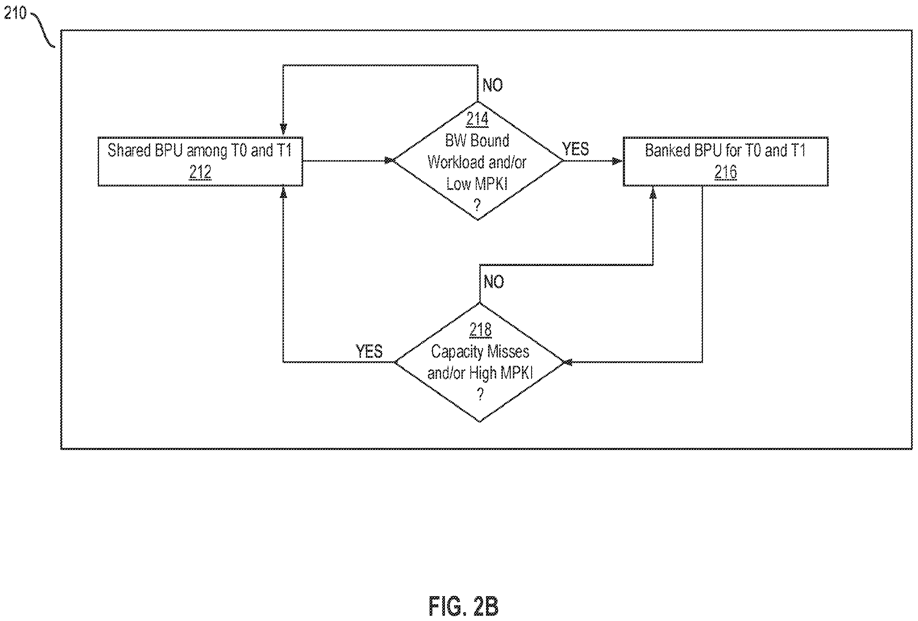

Figure 2B illustrates a method 210 for hybrid BAS for a BPU, such as a BPU including branch predictor 112 as shown for example in Figures 1 and 2A. In 212, a BPU may be configured in a latency mode such that its whole capacity is shared among threads (e.g., T0 and T1). In 214, it is determined whether the workload is bandwidth bound and/or MPKI is low (e.g., below a threshold). If so, the BPU is reconfigured to function in bandwidth mode (e.g., method 210 continues in 216), in which one thread (e.g., T0) has exclusive access to one bank and the other thread (e.g., T1) has exclusive access to the other bank. If not, then the BPU remains in latency mode (e.g., method 210 returns to 212).

From 216, it is determined in 218 whether capacity misses and/or MPKI are high (e.g. above a threshold). If so, then the BPU is reconfigured to operate in latency mode (e.g., method 210 returns to 212). If not, then the BPU remains in bandwidth mode (e.g., method 210 continues in 216).

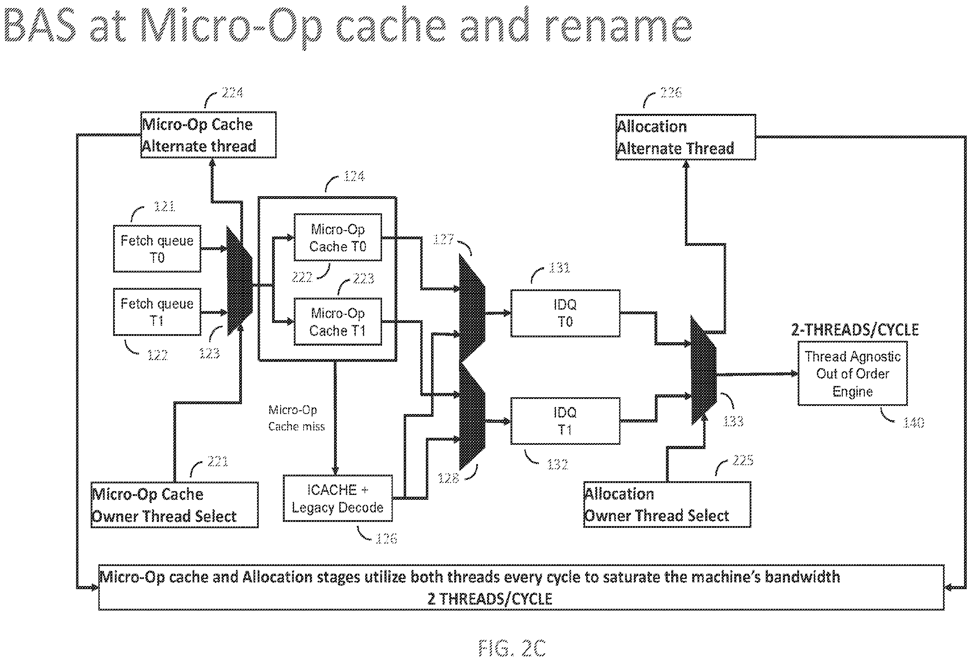

In embodiments, BAS may also be implemented at the micro-operation (micro-op or uop) cache and renaming. For example, Figure 2C shows a portion of the front-end architecture of Figure 1, reconfigured into a bandwidth mode in which micro-op cache 124 is hard partitioned into two halves, one per thread in the SMT2 architecture, micro-op cache partition 222 for T0 and micro-op cache partition 223 for T1. Also or instead, to perform renaming and allocation into OoO engine 140, there are there two separate register alias tables (RATs).

In these embodiments, each of stages 120 and 130 has its own thread selection logic which picks the thread to process (e.g., in round robin order). Unlike the latency mode as described above (in which only one thread owns each these two stages as decided by thread selection logic and in which when fetching code from the micro-op cache and/or when doing rename and allocating into the OoO engine, one thread may not be able to fully saturate the available bandwidth), bandwidth mode may make better use of the available bandwidth at these stages by using both threads in a given clock cycle. The latency thread selection logic still picks the owner thread in ping-pong order to maintain QoS for that thread. However, if the owner thread is not able to saturate the available bandwidth, the other (alternate) thread opportunistically pushes instructions forward through the additional bandwidth it gets from the starving owner thread's cycle.

These features of these embodiments may be implemented with changes to the existing architecture, such as to add another level of logic which can multiplex instructions from both the threads in a given cycle instead of just one. For example, as shown in Figure 2C, in a given cycle in pipeline stage 120, multiplexer 123 may select, in a given cycle, one of T0 from fetch queue 121 and T1 from fetch queue 122, based on micro-op cache owner thread select 221, as an owner thread to provide one or more inputs to micro-op cache partition 222 for T0 or micro-op cache partition 223 for T1. Then, in the same cycle if pipeline stage 130 is not saturated, multiplexer 123 may select the other (alternate) thread 224 to provide one or more additional inputs to the other of micro-op cache partition 222 for T0 or micro-op cache partition 223 for T1. Similarly, in a given cycle in pipeline stage 130, multiplexer 133 may select one of IDQ 131 for T0 and IDQ 132 for T1, based on allocation owner thread select 225, as an owner thread to provide inputs to thread agnostic OoO engine 140. Then, in the same cycle if OoO engine 140 is not saturated, multiplexer 133 may select the other thread as an alternate thread 226 to provide one or more additional inputs to OoO engine 140.

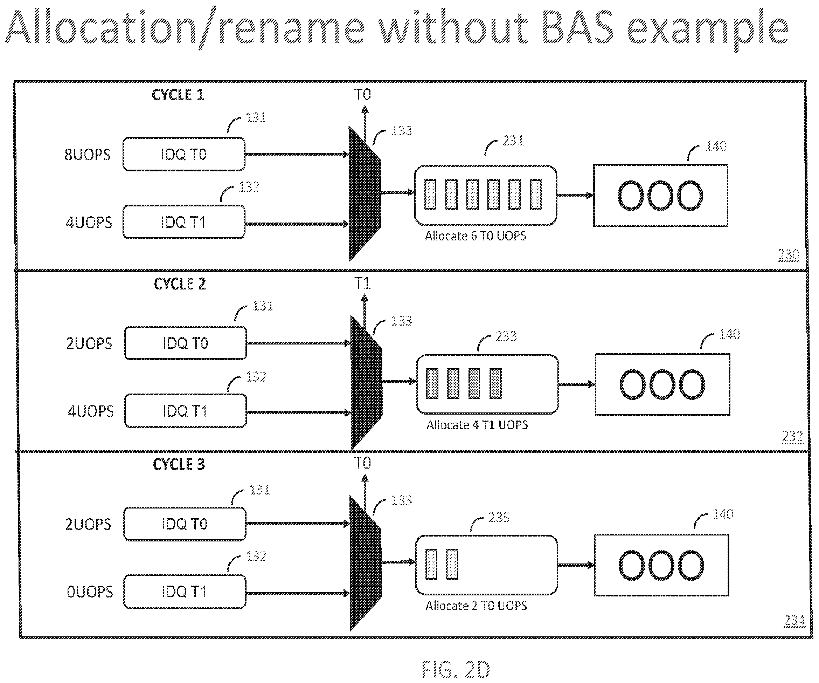

Thus, the micro-op cache and the allocation stages utilize both threads every cycle to saturate the machine's bandwidth. Figure 2D shows an example with multiplexer 133 configured in a latency mode (without BAS at allocation/rename). In a first cycle 230, T0 IDQ 131 holds eight uops and T1 IDQ 132 holds four uops; multiplexer 133 selects T0 and allocates six T0 uops 231, which saturates OoO engine 140. In a second cycle 232, T0 IDQ 131 holds two uops and T1 IDQ 132 holds four uops; multiplexer 133 selects, by round robin, T1 and allocates all four T1 uops 233, which does not saturate OoO engine 140. In a third cycle 234, T0 IDQ 131 holds two uops and T1 IDQ 132 holds zero uops; multiplexer 133 selects, by round robin, T0 and allocates all two T1 uops 235, which does not saturate OoO engine 140.

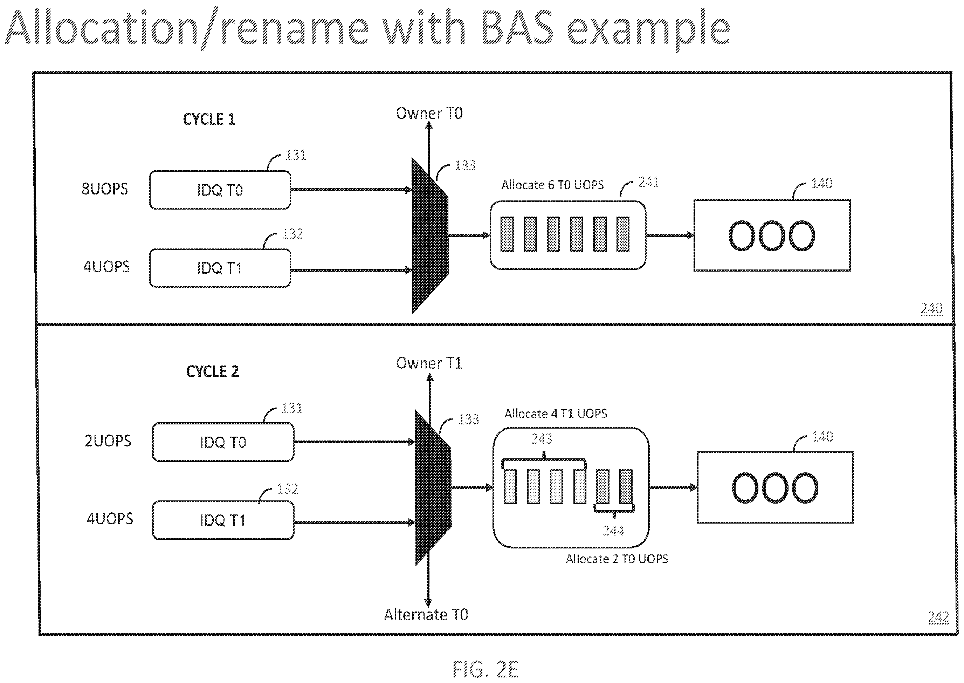

In contrast, Figure 2E shows an example with multiplexer 133 configured in a bandwidth mode (with BAS at allocation/rename). In a first cycle 240, T0 IDQ 131 holds eight uops and T1 IDQ 132 holds four uops; multiplexer 133 selects T0 and allocates six T0 uops 241, which saturates OoO engine 140. In a second cycle 242, T0 IDQ 131 holds two uops and T1 IDQ 132 holds four uops; multiplexer 133 selects, by round robin, T1 as the owner thread and allocates all four T1 uops 243, then selects, in the same cycle, T0 as the alternate thread and allocates two T0 uops 244, which saturates OoO engine 140.

In existing cores (e.g., SMT2 cores), the front end may be the largest bottleneck because of the imbalance between the amount of instruction-level parallelism available in the OoO back end to saturate its bandwidth versus the amount of parallelism provided by a traditional SMT2 processor's front end. In embodiments, after removing front end bottlenecks by boosting front end bandwidth with BAS in the front end, execution ports (e.g., load ports) in the back end may appear as the new bottleneck. However, reducing bottlenecks at load execution ports may be costly because it is difficult to scale these ports with increasing width of the machine, and it may involve increasing the number of read and write ports at the L1 cache.

Therefore, embodiments may also or instead include BAS at L1. In embodiments, gaining higher bandwidth with BAS at L1 may improve performance despite the cost of a drop in L1 hit rate because for workloads with already low hit rates, the requests missing in the L1 cache re-execute cache access to get data from cache. The missed requests typically take at least one more pass at accessing the L1 cache, which effectively doubles the cache requests for that load. With frequent misses in L1, the number of requests looking up L1 keeps increasing. As a result, the load port bandwidth available to cater these re-lookups in addition to the primary lookups of the L1 cache may become a bottleneck. Also, prefetching, typically having the least priority to access L1 cache, will never get a chance given the demand requests themselves are bottlenecked by the available load ports.

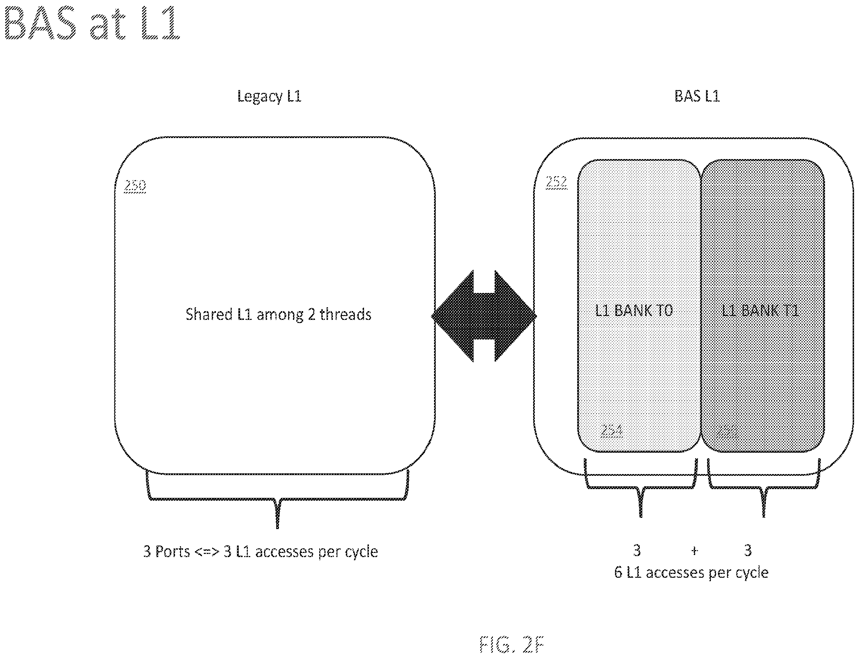

In embodiments, BAS at L1 may include banking the L1 cache (similar to banking the BPU as described above) and providing one bank per thread at L1. For example, Figure 2F shows an L1 cache 250 configured in latency mode, shared between two threads and having three ports to allow three L1 accesses per cycle, Figure 2F also shows the L1 cache 252 configured in bandwidth mode, such that bank 254 is available exclusively to T0 and bank 256 is available exclusively to T1 to allow six L1 accesses per cycle.

Although this approach may decrease the L1 hit rate, it may effectively double the L1 access bandwidth as both threads have their own bank and can simultaneously access their respective L1 banks using the same number of ports available previously. This approach may also provide some additional bandwidth for prefetching, thus compensating for the lost hit rate from banking. Eventually, by banking and increasing the load execution bandwidth, embodiments may increase the hit rates as more load requests are prefetched.

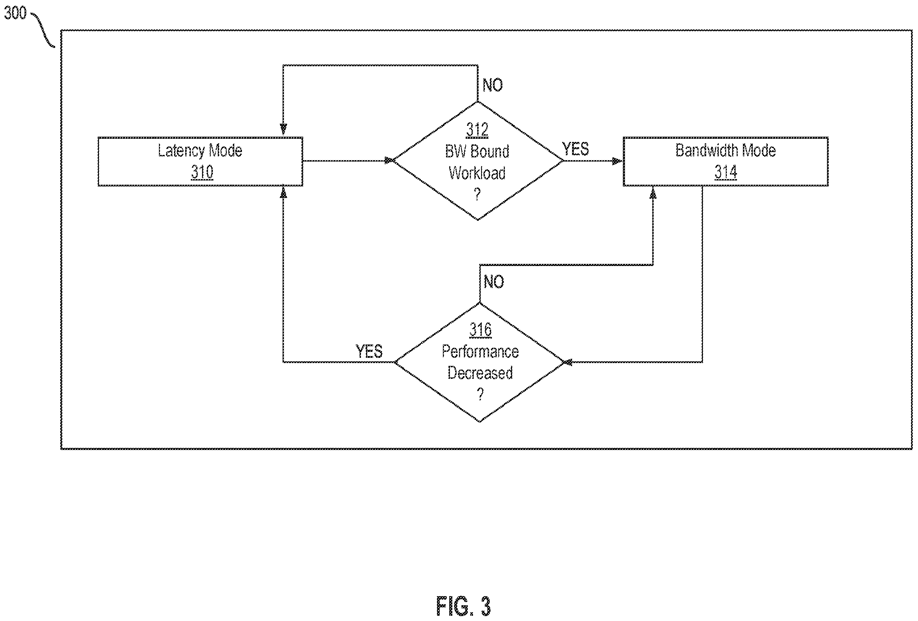

FIG. 3 illustrates a method 300 for BAS according to an embodiment. Method 300 may be performed, in full or in part, by and/or in connection with the operation of an apparatus such as that shown Figure 1, 2A, 2C, 2D, 2E, and/or 2F; therefore, all or any portion of the preceding description of or related to these figures may be applicable to method 300.

In 310, one or more core front end pipeline stages and/or front end or back end structures (e.g., a BPU, a micro-op cache, an allocation/rename stage, an L1 cache, etc.) may be configured in a latency mode such that only one thread (e.g., T0 or T1) holds ownership of the stage and/or the whole capacity of the structure is shared among threads (e.g., T0 and T1). In 312, it is determined whether the workload is bandwidth bound. If so, the stage and/or structure is reconfigured to function in a bandwidth mode (e.g., method 300 continues in 314), in which, in the case of a stage, an owner thread (e.g., T0) and one or more alternate threads (e.g., T1) can advance their instructions, uops, etc. in the same cycle, and/or, in the case of a structure, one thread (e.g., T0) has exclusive access to one partition or bank and the other thread (e.g., T1) has exclusive access to the other partition or bank. If not, then the stage and/or structure remains in latency mode (e.g., method 300 returns to 310).

From 314, it is determined in 316 whether bandwidth mode is decreasing performance (e.g., capacity misses are above a threshold). If so, then the stage or structure is reconfigured to operate in latency mode (e.g., method 300 returns to 310). If not, then the stage and/or structure remains in bandwidth mode (e.g., method 300 continues in 314).

### Example apparatuses, methods, etc.

According to some examples, an apparatus (e.g., a processor core, processor, system, system on a chip (SoC), etc.) includes front-end circuitry and back-end circuitry. The front-end circuitry is to process at least two instruction threads in a plurality of front-end pipeline stages. The front-end circuitry is to operate in a first mode and a second mode. In the first mode at least one of the plurality of front-end pipeline stages is configured to process only one of the at least two instruction threads per clock cycle. in the second mode the at least one of the plurality of front-end pipeline stages is configured to process at least two of the at least two instruction threads per clock cycle. The back-end circuitry is to execute operations based on the at least two instruction threads.

Any such examples may include any or any combination of the following aspects. The at least one of the plurality of front-end pipeline stages includes selection circuitry to, in the second mode, select an owner thread from the at least two instruction threads and an alternate thread from the at least two instruction threads, the alternate thread to use bandwidth unused by the owner thread. The front-end circuitry includes a micro-operation cache configured in the second mode to have a first partition for exclusive use by a first instruction thread of the at least two instruction threads and a second partition for exclusive use by a second instruction thread of the at least two instruction threads. The at least one of the plurality of front-end pipeline stages is to perform register allocation or register renaming. The front-end circuitry includes a branch predictor configured in the second mode to have a first bank for exclusive use by a first instruction thread of the at least two instruction threads and a second bank for exclusive use by a second instruction thread of the at least two instruction threads. The back-end circuitry includes a cache configured in the second mode to have a first bank for exclusive use by a first instruction thread of the at least two instruction threads and a second bank for exclusive use by a second instruction thread of the at least two instruction threads. The apparatus also includes mode switching circuitry to switch between the first mode and the second mode based on a measure of performance. The the measure of performance is a measure of multithreading bandwidth usage. The measure of performance is a measure of a miss rate of a banked structure.

According to some examples, a method includes operating front-end circuitry of a processor core in a first mode in which at least one of a plurality of front-end pipeline stages is configured to process at least two instruction threads per clock cycle; monitoring a measure of performance; and based on the measure of performance, switching the front-end circuitry to operate in a second mode in which the at least one of the plurality of front-end pipeline stages is configured to process only one of the at least two instruction threads per clock cycle.

Any such examples may include any or any combination of the following aspects. The at least one of the plurality of front-end pipeline stages includes selection circuitry to select an owner thread from the at least two instruction threads and an alternate thread from the at least two instruction threads, the alternate thread to use bandwidth unused by the owner thread. The the front-end circuitry includes a micro-operation cache configured in the first mode to have a first partition for exclusive use by a first instruction thread of the at least two instruction threads and a second partition for exclusive use by a second instruction thread of the at least two instruction threads. The at least one of the plurality of front-end pipeline stages is to perform register allocation or register renaming. The front-end circuitry includes a branch predictor configured in the first mode to have a first bank for exclusive use by a first instruction thread of the at least two instruction threads and a second bank for exclusive use by a second instruction thread of the at least two instruction threads. The method also includes operating back-end circuitry of the processor core in the first mode, wherein the back-end circuitry includes a cache configured in the first mode to have a first bank for exclusive use by a first instruction thread of the at least two instruction threads and a second bank for exclusive use by a second instruction thread of the at least two instruction threads. The measure of performance is a measure of multithreading bandwidth usage. The measure of performance is a measure of a miss rate of a banked structure.

According to some example, a processor core includes branch prediction circuitry in a first front-end pipeline stage, the branch prediction circuitry configured to process at least two instruction threads in a first clock cycle; decode circuitry in a second front-end pipeline stage, the decode circuitry configured to process the at least two instruction threads in a second clock cycle; and register allocation circuitry in a third front-end pipeline stage, the register allocation circuitry configured to process the at least two instruction threads in a third clock cycle.

Any such examples may include any or any combination of the following aspects. At least one of the decode circuitry and the register allocation circuitry includes selection circuitry to select an owner thread from the at least two instruction threads and an alternate thread from the at least two instruction threads, the alternate thread to use bandwidth unused by the owner thread. The branch prediction circuitry includes a branch predictor configured to have a first bank for exclusive use by a first instruction thread of the at least two instruction threads and a second bank for exclusive use by a second instruction thread of the at least two instruction threads.

According to some examples, an apparatus may include means for performing any function disclosed herein; an apparatus may include a data storage device that stores code that when executed by a hardware processor or controller causes the hardware processor or controller to perform any method or portion of a method disclosed herein; an apparatus, method, system etc. may be as described in the detailed description; a non-transitory machine-readable medium may store instructions that when executed by a machine causes the machine to perform any method or portion of a method disclosed herein. Embodiments may include any details, features, etc. or combinations of details, features, etc. described in this specification.

### Example Computer Architectures

Detailed below are descriptions of example computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are generally suitable.

FIG. 4 illustrates an example computing system. Multiprocessor system 400 is an interfaced system and includes a plurality of processors or cores including a first processor 470 and a second processor 480 coupled via an interface 450 such as a point-to-point (P-P) interconnect, a fabric, and/or bus. In some examples, the first processor 470 and the second processor 480 are homogeneous. In some examples, the first processor 470 and the second processor 480 are heterogenous. Though the example system 400 is shown to have two processors, the system may have three or more processors, or may be a single processor system. In some examples, the computing system is a system on a chip (SoC).

Processors 470 and 480 are shown including integrated memory controller (IMC) circuitry 472 and 482, respectively. Processor 470 also includes interface circuits 476 and 478; similarly, second processor 480 includes interface circuits 486 and 488. Processors 470, 480 may exchange information via the interface 450 using interface circuits 478, 488. IMCs 472 and 482 couple the processors 470, 480 to respective memories, namely a memory 432 and a memory 434, which may be portions of main memory locally attached to the respective processors.

Processors 470, 480 may each exchange information with a network interface (NW I/F) 490 via individual interfaces 452, 454 using interface circuits 476, 494, 486, 498. The network interface 490 (e.g., one or more of an interconnect, bus, and/or fabric, and in some examples is a chipset) may optionally exchange information with a coprocessor 438 via an interface circuit 492. In some examples, the coprocessor 438 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 470, 480 or outside of both processors, yet connected with the processors via an interface such as P-P interconnect, such that either or both processors' local cache information may be stored in the shared cache if a processor is placed into a low power mode.

Network interface 490 may be coupled to a first interface 416 via interface circuit 496. In some examples, first interface 416 may be an interface such as a Peripheral Component Interconnect (PCI) interconnect, a PCI Express interconnect or another I/O interconnect. In some examples, first interface 416 is coupled to a power control unit (PCU) 417, which may include circuitry, software, and/or firmware to perform power management operations with regard to the processors 470, 480 and/or co-processor 438. PCU 417 provides control information to a voltage regulator (not shown) to cause the voltage regulator to generate the appropriate regulated voltage. PCU 417 also provides control information to control the operating voltage generated. In various examples, PCU 417 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 417 is illustrated as being present as logic separate from the processor 470 and/or processor 480. In other cases, PCU 417 may execute on a given one or more of cores (not shown) of processor 470 or 480. In some cases, PCU 417 may be implemented as a microcontroller (dedicated or general-purpose) or other control logic configured to execute its own dedicated power management code, sometimes referred to as P-code. In yet other examples, power management operations to be performed by PCU 417 may be implemented externally to a processor, such as by way of a separate power management integrated circuit (PMIC) or another component external to the processor. In yet other examples, power management operations to be performed by PCU 417 may be implemented within BIOS or other system software.

Various I/O devices 414 may be coupled to first interface 416, along with a bus bridge 418 which couples first interface 416 to a second interface 420. In some examples, one or more additional processor(s) 415, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 416. In some examples, second interface 420 may be a low pin count (LPC) interface. Various devices may be coupled to second interface 420 including, for example, a keyboard and/or mouse 422, communication devices 427 and storage circuitry 428. Storage circuitry 428 may be one or more non-transitory machine-readable storage media as described below, such as a disk drive or other mass storage device which may include instructions/code and data 430. Further, an audio I/O 424 may be coupled to second interface 420. Note that other architectures than the point-to-point architecture described above are possible. For example, instead of the point-to-point architecture, a system such as multiprocessor system 400 may implement a multi-drop interface or other such architecture.

### Example Core Architectures, Processors, and Computer Architectures

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

FIG. 5 illustrates a block diagram of an example processor and/or SoC 500 that may have one or more cores and an integrated memory controller. The solid lined boxes illustrate a processor 500 with a single core 502(A), system agent unit circuitry 510, and a set of one or more interface controller unit(s) circuitry 516, while the optional addition of the dashed lined boxes illustrates an alternative processor 500 with multiple cores 502(A)-(N), a set of one or more integrated memory controller unit(s) circuitry 514 in the system agent unit circuitry 510, and special purpose logic 508, as well as a set of one or more interface controller units circuitry 516. Note that the processor 500 may be one of the processors 470 or 480, or co-processor 438 or 415 of FIG. 4.

Thus, different implementations of the processor 500 may include: 1) a CPU with the special purpose logic 508 being integrated graphics and/or scientific (throughput) logic (which may include one or more cores, not shown), and the cores 502(A)-(N) being one or more general purpose cores (e.g., general purpose in-order cores, general purpose out-of-order cores, or a combination of the two); 2) a coprocessor with the cores 502(A)-(N) being a large number of special purpose cores intended primarily for graphics and/or scientific (throughput); and 3) a coprocessor with the cores 502(A)-(N) being a large number of general purpose in-order cores. Thus, the processor 500 may be a general-purpose processor, coprocessor, or special-purpose processor, such as, for example, a network or communication processor, compression engine, graphics processor, GPGPU (general purpose graphics processing unit), a high throughput many integrated cores (MIC) coprocessor (including 30 or more cores), embedded processor, or the like. The processor may be implemented on one or more chips. The processor 500 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 504(A)-(N) within the cores 502(A)-(N), a set of one or more shared cache unit(s) circuitry 506, and external memory (not shown) coupled to the set of integrated memory controller unit(s) circuitry 514. The set of one or more shared cache unit(s) circuitry 506 may include one or more mid-level caches, such as level 2 (L2), level 3 (L3), level 4 (L4), or other levels of cache, such as a last level cache (LLC), and/or combinations thereof. While in some examples interface network circuitry 512 (e.g., a ring interconnect) interfaces the special purpose logic 508 (e.g., integrated graphics logic), the set of shared cache unit(s) circuitry 506, and the system agent unit circuitry 510, alternative examples use any number of well-known techniques for interfacing such units. In some examples, coherency is maintained between one or more of the shared cache unit(s) circuitry 506 and cores 502(A)-(N). In some examples, interface controller unit circuitry 516 couples the cores 502 to one or more other devices 518 such as one or more I/O devices, storage, one or more communication devices (e.g., wireless networking, wired networking, etc.), etc.

In some examples, one or more of the cores 502(A)-(N) are capable of multi-threading. The system agent unit circuitry 510 includes those components coordinating and operating cores 502(A)-(N). The system agent unit circuitry 510 may include, for example, power control unit (PCU) circuitry and/or display unit circuitry (not shown). The PCU may be or may include logic and components needed for regulating the power state of the cores 502(A)-(N) and/or the special purpose logic 508 (e.g., integrated graphics logic). The display unit circuitry is for driving one or more externally connected displays.

The cores 502(A)-(N) may be homogenous in terms of instruction set architecture (ISA). Alternatively, the cores 502(A)-(N) may be heterogeneous in terms of ISA; that is, a subset of the cores 502(A)-(N) may be capable of executing an ISA, while other cores may be capable of executing only a subset of that ISA or another ISA.

### Example Core Architectures - In-order and out-of-order core block diagram

FIG. 6A is a block diagram illustrating both an example in-order pipeline and an example register renaming, out-of-order issue/execution pipeline according to examples. FIG. 6B is a block diagram illustrating both an example in-order architecture core and an example register renaming, out-of-order issue/execution architecture core to be included in a processor according to examples. The solid lined boxes in FIGS. 6A-B illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 6A, a processor pipeline 600 includes a fetch stage 602, an optional length decoding stage 604, a decode stage 606, an optional allocation (Alloc) stage 608, an optional renaming stage 610, a schedule (also known as a dispatch or issue) stage 612, an optional register read/memory read stage 614, an execute stage 616, a write back/memory write stage 618, an optional exception handling stage 622, and an optional commit stage 624. One or more operations can be performed in each of these processor pipeline stages. For example, during the fetch stage 602, one or more instructions are fetched from instruction memory, and during the decode stage 606, the one or more fetched instructions may be decoded, addresses (e.g., load store unit (LSU) addresses) using forwarded register ports may be generated, and branch forwarding (e.g., immediate offset or a link register (LR)) may be performed. In one example, the decode stage 606 and the register read/memory read stage 614 may be combined into one pipeline stage. In one example, during the execute stage 616, the decoded instructions may be executed, LSU address/data pipelining to an Advanced Microcontroller Bus (AMB) interface may be performed, multiply and add operations may be performed, arithmetic operations with branch results may be performed, etc.

By way of example, the example register renaming, out-of-order issue/execution architecture core of FIG. 6B may implement the pipeline 600 as follows: 1) the instruction fetch circuitry 638 performs the fetch and length decoding stages 602 and 604; 2) the decode circuitry 640 performs the decode stage 606; 3) the rename/allocator unit circuitry 652 performs the allocation stage 608 and renaming stage 610; 4) the scheduler(s) circuitry 656 performs the schedule stage 612; 5) the physical register file(s) circuitry 658 and the memory unit circuitry 670 perform the register read/memory read stage 614; the execution cluster(s) 660 perform the execute stage 616; 6) the memory unit circuitry 670 and the physical register file(s) circuitry 658 perform the write back/memory write stage 618; 7) various circuitry may be involved in the exception handling stage 622; and 8) the retirement unit circuitry 654 and the physical register file(s) circuitry 658 perform the commit stage 624.

FIG. 6B shows a processor core 690 including front-end unit circuitry 630 coupled to execution engine unit circuitry 650, and both are coupled to memory unit circuitry 670. The core 690 may be a reduced instruction set architecture computing (RISC) core, a complex instruction set architecture computing (CISC) core, a very long instruction word (VLIW) core, or a hybrid or alternative core type. As yet another option, the core 690 may be a special-purpose core, such as, for example, a network or communication core, compression engine, coprocessor core, general purpose computing graphics processing unit (GPGPU) core, graphics core, or the like.

The front-end unit circuitry 630 may include branch prediction circuitry 632 coupled to instruction cache circuitry 634, which is coupled to an instruction translation lookaside buffer (TLB) 636, which is coupled to instruction fetch circuitry 638, which is coupled to decode circuitry 640. In one example, the instruction cache circuitry 634 is included in the memory unit circuitry 670 rather than the front-end circuitry 630. The decode circuitry 640 (or decoder) may decode instructions, and generate as an output one or more micro-operations, micro-code entry points, microinstructions, other instructions, or other control signals, which are decoded from, or which otherwise reflect, or are derived from, the original instructions. The decode circuitry 640 may further include address generation unit (AGU, not shown) circuitry. In one example, the AGU generates an LSU address using forwarded register ports, and may further perform branch forwarding (e.g., immediate offset branch forwarding, LR register branch forwarding, etc.). The decode circuitry 640 may be implemented using various different mechanisms. Examples of suitable mechanisms include, but are not limited to, look-up tables, hardware implementations, programmable logic arrays (PLAs), microcode read only memories (ROMs), etc. In one example, the core 690 includes a microcode ROM (not shown) or other medium that stores microcode for certain macroinstructions (e.g., in decode circuitry 640 or otherwise within the front-end circuitry 630). In one example, the decode circuitry 640 includes a micro-operation (micro-op) or operation cache (not shown) to hold/cache decoded operations, micro-tags, or micro-operations generated during the decode or other stages of the processor pipeline 600. The decode circuitry 640 may be coupled to rename/allocator unit circuitry 652 in the execution engine circuitry 650.

The execution engine circuitry 650 includes the rename/allocator unit circuitry 652 coupled to retirement unit circuitry 654 and a set of one or more scheduler(s) circuitry 656. The scheduler(s) circuitry 656 represents any number of different schedulers, including reservations stations, central instruction window, etc. In some examples, the scheduler(s) circuitry 656 can include arithmetic logic unit (ALU) scheduler/scheduling circuitry, ALU queues, address generation unit (AGU) scheduler/scheduling circuitry, AGU queues, etc. The scheduler(s) circuitry 656 is coupled to the physical register file(s) circuitry 658. Each of the physical register file(s) circuitry 658 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one example, the physical register file(s) circuitry 658 includes vector registers unit circuitry, writemask registers unit circuitry, and scalar register unit circuitry. These register units may provide architectural vector registers, vector mask registers, general-purpose registers, etc. The physical register file(s) circuitry 658 is coupled to the retirement unit circuitry 654 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 654 and the physical register file(s) circuitry 658 are coupled to the execution cluster(s) 660. The execution cluster(s) 660 includes a set of one or more execution unit(s) circuitry 662 and a set of one or more memory access circuitry 664. The execution unit(s) circuitry 662 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 656, physical register file(s) circuitry 658, and execution cluster(s) 660 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 664). It should also be understood that where separate pipelines are used, one or more of these pipelines may be out-of-order issue/execution and the rest in-order.

In some examples, the execution engine unit circuitry 650 may perform load store unit (LSU) address/data pipelining to an Advanced Microcontroller Bus (AMB) interface (not shown), and address phase and writeback, data phase load, store, and branches.

The set of memory access circuitry 664 is coupled to the memory unit circuitry 670, which includes data TLB circuitry 672 coupled to data cache circuitry 674 coupled to level 2 (L2) cache circuitry 676. In one example, the memory access circuitry 664 may include load unit circuitry, store address unit circuitry, and store data unit circuitry, each of which is coupled to the data TLB circuitry 672 in the memory unit circuitry 670. The instruction cache circuitry 634 is further coupled to the level 2 (L2) cache circuitry 676 in the memory unit circuitry 670. In one example, the instruction cache 634 and the data cache 674 are combined into a single instruction and data cache (not shown) in L2 cache circuitry 676, level 3 (L3) cache circuitry (not shown), and/or main memory. The L2 cache circuitry 676 is coupled to one or more other levels of cache and eventually to a main memory.

The core 690 may support one or more instructions sets (e.g., the x86 instruction set architecture (optionally with some extensions that have been added with newer versions); the MIPS instruction set architecture; the ARM instruction set architecture (optionally with optional additional extensions such as NEON)), including the instruction(s) described herein. In one example, the core 690 includes logic to support a packed data instruction set architecture extension (e.g., AVX1, AVX2), thereby allowing the operations used by many multimedia applications to be performed using packed data.

### Example Execution Unit(s) Circuitry

FIG. 7 illustrates examples of execution unit(s) circuitry, such as execution unit(s) circuitry 662 of FIG. 6B. As illustrated, execution unit(s) circuity 662 may include one or more ALU circuits 701, optional vector/single instruction multiple data (SIMD) circuits 703, load/store circuits 705, branch/jump circuits 707, and/or Floating-point unit (FPU) circuits 709. ALU circuits 701 perform integer arithmetic and/or Boolean operations. Vector/SIMD circuits 703 perform vector/SIMD operations on packed data (such as SIMD/vector registers). Load/store circuits 705 execute load and store instructions to load data from memory into registers or store from registers to memory. Load/store circuits 705 may also generate addresses. Branch/jump circuits 707 cause a branch or jump to a memory address depending on the instruction. FPU circuits 709 perform floating-point arithmetic. The width of the execution unit(s) circuitry 662 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

Program code may be applied to input information to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), a field programmable gate array (FPGA), a microprocessor, or any combination thereof.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and non-volatile memory and/or storage elements), at least one input device, and at least one output device.

One or more aspects of at least one example may be implemented by representative instructions stored on a machine-readable medium which represents various logic within the processor, which when read by a machine causes the machine to fabricate logic to perform the techniques described herein. Such representations, known as "intellectual property (IP) cores" may be stored on a tangible, machine readable medium and supplied to various customers or manufacturing facilities to load into the fabrication machines that make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors and/or system features described herein. Such examples may also be referred to as program products.

### Emulation (including binary translation, code morphing, etc.)

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

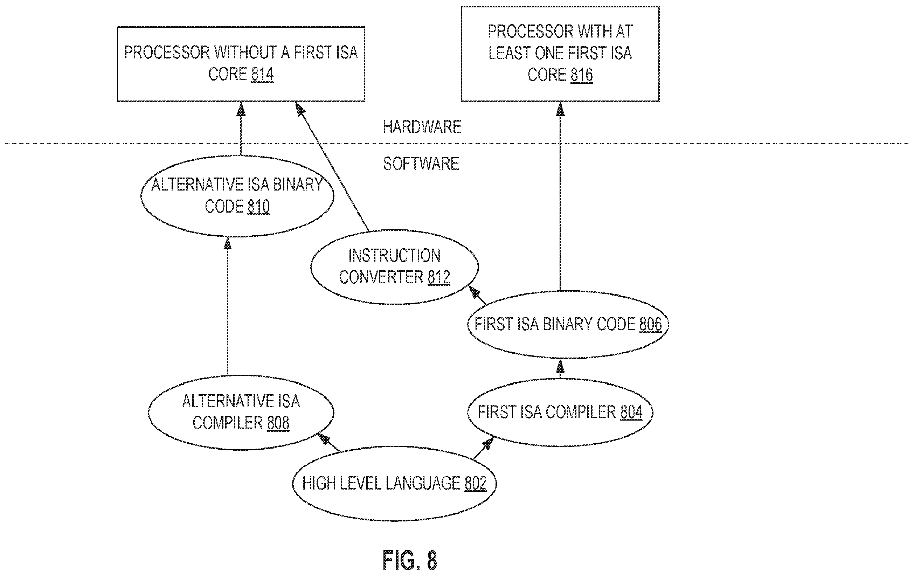

FIG. 8 is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. FIG. 8 shows a program in a high-level language 802 may be compiled using a first ISA compiler 804 to generate first ISA binary code 806 that may be natively executed by a processor with at least one first ISA core 816. The processor with at least one first ISA core 816 represents any processor that can perform substantially the same functions as an Intel^{®} processor with at least one first ISA core by compatibly executing or otherwise processing (1) a substantial portion of the first ISA or (2) object code versions of applications or other software targeted to run on an Intel processor with at least one first ISA core, in order to achieve substantially the same result as a processor with at least one first ISA core. The first ISA compiler 804 represents a compiler that is operable to generate first ISA binary code 806 (e.g., object code) that can, with or without additional linkage processing, be executed on the processor with at least one first ISA core 816. Similarly, FIG. 8 shows the program in the high-level language 802 may be compiled using an alternative ISA compiler 808 to generate alternative ISA binary code 810 that may be natively executed by a processor without a first ISA core 814. The instruction converter 812 is used to convert the first ISA binary code 806 into code that may be natively executed by the processor without a first ISA core 814. This converted code is not necessarily to be the same as the alternative ISA binary code 810; however, the converted code will accomplish the general operation and be made up of instructions from the alternative ISA. Thus, the instruction converter 812 represents software, firmware, hardware, or a combination thereof that, through emulation, simulation, or any other process, allows a processor or other electronic device that does not have a first ISA processor or core to execute the first ISA binary code 806.

References to "one example," "an example," "one embodiment," "an embodiment," etc., indicate that the example or embodiment described may include a particular feature, structure, or characteristic, but every example or embodiment may not necessarily include the particular feature, structure, or characteristic. Moreover, such phrases do not necessarily refer to the same example or embodiment. Further, when a particular feature, structure, or characteristic is described in connection with an example or embodiment, it is submitted that it is within the knowledge of one skilled in the art to affect such feature, structure, or characteristic in connection with other examples or embodiments whether or not explicitly described.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e., A and B, A and C, B and C, and A, B and C). As used in this specification and the claims and unless otherwise specified, the use of the ordinal adjectives "first," "second," "third," etc. to describe an element merely indicates that a particular instance of an element or different instances of like elements are being referred to and is not intended to imply that the elements so described must be in a particular sequence, either temporally, spatially, in ranking, or in any other manner. Also, as used in descriptions of embodiments, a "j" character between terms may mean that what is described may include or be implemented using, with, and/or according to the first term and/or the second term (and/or any other additional terms).

The specification and drawings are, accordingly, to be regarded in an illustrative rather than a restrictive sense. It will, however, be evident that various modifications and changes may be made thereunto without departing from the broader spirit and scope of the disclosure as set forth in the claims.

## Claims

1. An apparatus comprising:
front-end circuitry to process at least two instruction threads in a plurality of front-end pipeline stages, the front-end circuitry to operate in a first mode and a second mode, wherein in the first mode at least one of the plurality of front-end pipeline stages is configured to process only one of the at least two instruction threads per clock cycle, and in the second mode the at least one of the plurality of front-end pipeline stages is configured to process at least two of the at least two instruction threads per clock cycle; and
back-end circuitry to execute operations based on the at least two instruction threads.

2. The apparatus of claim 1, wherein the at least one of the plurality of front-end pipeline stages includes selection circuitry to, in the second mode, select an owner thread from the at least two instruction threads and an alternate thread from the at least two instruction threads, the alternate thread to use bandwidth unused by the owner thread.

3. The apparatus of claim 1 or 2, wherein the front-end circuitry includes a micro-operation cache configured in the second mode to have a first partition for exclusive use by a first instruction thread of the at least two instruction threads and a second partition for exclusive use by a second instruction thread of the at least two instruction threads.

4. The apparatus of any of claims 1-3, wherein the at least one of the plurality of front-end pipeline stages is to perform register allocation or register renaming.

5. The apparatus of any of claims 1-4, wherein the front-end circuitry includes a branch predictor configured in the second mode to have a first bank for exclusive use by a first instruction thread of the at least two instruction threads and a second bank for exclusive use by a second instruction thread of the at least two instruction threads.

6. The apparatus of any of claims 1-5, wherein the back-end circuitry includes a cache configured in the second mode to have a first bank for exclusive use by a first instruction thread of the at least two instruction threads and a second bank for exclusive use by a second instruction thread of the at least two instruction threads.

7. The apparatus of any of claims 1-6, further including mode switching circuitry to switch between the first mode and the second mode based on a measure of performance.

8. The apparatus of any of claims 1-7, wherein the measure of performance is a measure of multithreading bandwidth usage or a measure of a miss rate of a banked structure.

9. A method comprising:
operating front-end circuitry of a processor core in a first mode in which at least one of a plurality of front-end pipeline stages is configured to process at least two instruction threads per clock cycle;
monitoring a measure of performance; and
based on the measure of performance, switching the front-end circuitry to operate in a second mode in which the at least one of the plurality of front-end pipeline stages is configured to process only one of the at least two instruction threads per clock cycle.

10. The method of claim 9, wherein the at least one of the plurality of front-end pipeline stages includes selection circuitry to select an owner thread from the at least two instruction threads and an alternate thread from the at least two instruction threads, the alternate thread to use bandwidth unused by the owner thread.

11. The method of claim 9 or 10, wherein the front-end circuitry includes:
a micro-operation cache configured in the first mode to have a first partition for exclusive use by a first instruction thread of the at least two instruction threads and a second partition for exclusive use by a second instruction thread of the at least two instruction threads; or
a branch predictor configured in the first mode to have a first bank for exclusive use by a first instruction thread of the at least two instruction threads and a second bank for exclusive use by a second instruction thread of the at least two instruction threads.

12. The method of any of claims 9-11, further comprising operating back-end circuitry of the processor core in the first mode, wherein the back-end circuitry includes a cache configured in the first mode to have a first bank for exclusive use by a first instruction thread of the at least two instruction threads and a second bank for exclusive use by a second instruction thread of the at least two instruction threads.

13. A processor core comprising:
branch prediction circuitry in a first front-end pipeline stage, the branch prediction circuitry configured to process at least two instruction threads in a first clock cycle;
decode circuitry in a second front-end pipeline stage, the decode circuitry configured
to process the at least two instruction threads in a second clock cycle; and register allocation circuitry in a third front-end pipeline stage, the register allocation
circuitry configured to process the at least two instruction threads in a third clock cycle.

14. The processor core of claim 13, wherein at least one of the decode circuitry and the register allocation circuitry includes selection circuitry to select an owner thread from the at least two instruction threads and an alternate thread from the at least two instruction threads, the alternate thread to use bandwidth unused by the owner thread.

15. The processor core of claim 13 or 14, wherein the branch prediction circuitry includes a branch predictor configured to have a first bank for exclusive use by a first instruction thread of the at least two instruction threads and a second bank for exclusive use by a second instruction thread of the at least two instruction threads.
